# EUROPÄISCHE PATENTSCHRIFT

(11) **EP 3 611 659 B1**
(45) Veröffentlichungstag und Bekanntmachung des Hinweises auf die Patenterteilung: **18.10.2023**
(21) Anmeldenummer: 19190107.3
(22) Anmeldetag: 05.08.2019
(51) Int. Cl.: G06V 10/98, G06V 20/52, G06V 40/12, G06V 40/16, G06V 40/18, G06V 40/50, G07C 9/37

(54) **VORRICHTUNG ZUM BEREITSTELLEN EINER MEHRZAHL VON BIOMETRISCHEN MERKMALEN EINER MEHRZAHL VON PERSONEN EINER PERSONENGRUPPE**
DEVICE FOR PROVIDING A PLURALITY OF BIOMETRIC FEATURES OF A PLURALITY OF PEOPLE IN A GROUP
DISPOSITIF DE FOURNITURE D'UNE PLURALITÉ DE CARACTÉRISTIQUES BIOMÉTRIQUES D'UNE PLURALITÉ DE PERSONNES D'UN GROUPE DE PERSONNES

(30) Priorität: 14.08.2018 DE 102018119767
(43) Veröffentlichungstag der Anmeldung: 19.02.2020
(73) Patentinhaber: Bundesdruckerei GmbH, 10969 Berlin (DE)
(72) Erfinder: WOLF, Andreas, 13158 Berlin (DE); RABELER, Uwe, 30453 Hannover (DE)
(74) Vertreter: Patentship Patentanwaltsgesellschaft mbH

(56) Entgegenhaltungen:
- EP-A1- 2 710 561
- JP-A- 2006 215 858
- JP-A- 2008 071 205
- US-A1- 2006 245 620
- US-A1- 2010 194 900

## Beschreibung

### TECHNISCHES GEBIET

Die vorliegende Erfindung betrifft das Gebiet der Erfassung biometrischer Merkmale einer Mehrzahl von Personen, insbesondere einer Personengruppe.

### TECHNISCHER HINTERGRUND

Bekannte Zutrittskontrollvorrichtungen, welche beispielsweise zur automatisierten Grenzkontrolle in Form von Automated Border Control (ABC) Gates verwendet werden, sind typischerweise für erwachsene Einzelpersonen ausgelegt.

Zur biometrischen Authentifizierung wird dabei typischerweise ein Vergleich eines Gesichtsbildes mit einem Referenzgesichtsbild, ein Vergleich eines Irisbildes mit einem Referenzirisbild, oder ein Vergleich eines Fingerabdruckes mit einem Referenzfingerabdruck durchgeführt. Derartige biometrische Merkmale können beispielsweise in Echtzeit von der Einzelperson in der Zutrittskontrollvorrichtung erfasst werden. Die entsprechenden biometrischen Referenzmerkmale können beispielsweise aus einem mitgeführten Reisedokument ausgelesen werden.

Die biometrische Authentifizierung ist folglich mit einer vorherigen Vereinzelung von Personen verbunden, um ein biometrisches Merkmal und ein biometrisches Referenzmerkmal zweifelsfrei einander zuordnen zu können. Die vorherige Vereinzelung ist jedoch mit einem erheblichen administrativen Aufwand sowie mit einem begrenzten Durchsatz von Personen an einer Zutrittskontrollvorrichtung verbunden.

Eine Verfolgung (engl. Tracking) einer Mehrzahl von Personen mittels bekannter Überwachungskameras ist nicht geeignet, um biometrische Merkmale in der erforderlichen Qualität zu erfassen, und entsprechende biometrische Referenzmerkmale bereitzustellen. Die Offenlegungsschrift JP 2006 215 858 A offenbart ein Eingangs- und Ausgangsverwaltungssystem.

### BESCHREIBUNG DER ERFINDUNG

Es ist daher eine Aufgabe der vorliegenden Erfindung, ein effizientes Konzept zum Bereitstellen einer Mehrzahl von biometrischen Merkmalen einer Mehrzahl von Personen einer Personengruppe zu schaffen.

Diese Aufgabe wird durch die Merkmale der unabhängigen Ansprüche gelöst. Vorteilhafte Ausführungsformen der Erfindung sind Gegenstand der Beschreibung, der Zeichnungen sowie der abhängigen Ansprüche.

Die vorliegende Erfindung basiert auf der Erkenntnis, dass die obige Aufgabe dadurch gelöst werden kann, dass jeweils eine Anzahl von Personen durch eine Personenzähleinrichtung sowie durch eine Erfassungseinrichtung unabhängig voneinander bestimmt wird, und als Kriterium verwendet wird, um eine vollständige Erfassung von biometrischen Merkmalen einer Mehrzahl von Personen zu gewährleisten. Die Personenzähleinrichtung kann beispielsweise eine Lichtschranke, eine Personenwaage, eine Dome-Kamera, einen Radar-Sensor, einen Ladar-Sensor, einen Infrarot-Sensor, einen Ultraschallsensor, oder eine Time-of-Flight Kamera umfassen, um eine erste Personenanzahl zu bestimmen. Die Erfassungseinrichtung kann die Mehrzahl von biometrischen Merkmalen erfassen, und eine Anzahl unterschiedlicher biometrischer Merkmale bestimmen, um eine zweite Personenanzahl zu bestimmen. Die erfasste Mehrzahl von biometrischen Merkmalen wird nur dann zur weiteren Verarbeitung bzw. Handhabung bereitgestellt, falls die erste Personenanzahl mit der zweiten Personenanzahl übereinstimmt.

Die Mehrzahl von Personen können sich räumlich nahe beieinander befinden, und beispielsweise einen vorbestimmten maximalen Abstand zueinander aufweisen. Der vorbestimmte maximale Abstand kann beispielsweise 10 cm, 20 cm, 50 cm, 1 m, 2 m, 5 m oder 10 m betragen. Die Mehrzahl von Personen kann ferner eine vorbestimmte maximale Anzahl von Personen aufweisen. Die vorbestimmte maximale Anzahl von Personen kann beispielsweise 2 Personen, 3 Personen, 5 Personen oder 10 Personen betragen.

Dadurch wird erreicht, dass eine Mehrzahl von biometrischen Merkmalen einer Mehrzahl von Personen einer Personengruppe, beispielsweise zur Gruppenzutrittskontrolle (engl. Group-Access-Control), effizient bereitgestellt werden kann, und ein Durchsatz von Personen an einer Zutrittskontrollvorrichtung erhöht werden kann. Insbesondere wird dadurch erreicht, dass Zutrittskontrollvorrichtungen, beispielsweise ABC Gates, für kleine oder große Personengruppen, beispielsweise begleitete behinderte Personen oder Familien mit Kindern, realisiert werden können.

Gemäß einem ersten Aspekt betrifft die Erfindung eine Zutrittskontrollvorrichtung gemäß Anspruch 1. Sie umfasst eine Vorrichtung zum Bereitstellen einer Mehrzahl von biometrischen Merkmalen einer Mehrzahl von Personen einer Personengruppe, wobei jeder Person ein biometrisches Merkmal zugeordnet ist. Die Vorrichtung umfasst eine Personenzähleinrichtung, welche ausgebildet ist, eine Anzahl von Personen in der Personengruppe zu bestimmen, um eine erste Personenanzahl zu erhalten. Die Vorrichtung umfasst ferner eine Erfassungseinrichtung, welche ausgebildet ist, die Mehrzahl von biometrischen Merkmalen zu erfassen, zumindest zwei biometrische Merkmale der Mehrzahl von biometrischen Merkmalen zu vergleichen, eine Anzahl unterschiedlicher biometrischer Merkmale in der Mehrzahl von biometrischen Merkmalen zu bestimmen, um eine zweite Personenanzahl zu erhalten, und die Mehrzahl von biometrischen Merkmalen bereitzustellen, falls die erste Personenanzahl mit der zweiten Personenanzahl übereinstimmt.

Gemäß einer Ausführungsform ist die Erfassungseinrichtung ausgebildet, die Mehrzahl von biometrischen Merkmalen nicht bereitzustellen, falls die erste Personenanzahl mit der zweiten Personenanzahl nicht übereinstimmt. Dadurch wird der Vorteil erreicht, dass die Mehrzahl von biometrischen Merkmalen nur dann bereitgestellt wird, falls eine vollständige Erfassung der Mehrzahl von biometrischen Merkmalen durchgeführt wurde.

Gemäß einer Ausführungsform umfasst die Vorrichtung eine Kommunikationsschnittstelle, wobei das Bereitstellen der Mehrzahl von biometrischen Merkmalen ein Aussenden der Mehrzahl von biometrischen Merkmalen über die Kommunikationsschnittstelle umfasst. Dadurch wird der Vorteil erreicht, dass die Mehrzahl von biometrischen Merkmalen zur weiteren Verarbeitung bzw. Handhabung an eine entfernte Datenverarbeitungseinrichtung ausgesendet werden kann.

Gemäß einer Ausführungsform umfasst die Vorrichtung einen Speicher, wobei das Bereitstellen der Mehrzahl von biometrischen Merkmalen ein Speichern der Mehrzahl von biometrischen Merkmalen in dem Speicher umfasst. Dadurch wird der Vorteil erreicht, dass die Mehrzahl von biometrischen Merkmalen zur weiteren Verarbeitung bzw. Handhabung vorgehalten werden können.

Gemäß einer Ausführungsform umfasst die Vorrichtung einen Prozessor, wobei das Bereitstellen der Mehrzahl von biometrischen Merkmalen ein Verarbeiten der Mehrzahl von biometrischen Merkmalen durch den Prozessor umfasst. Dadurch wird der Vorteil erreicht, dass die Mehrzahl von biometrischen Merkmalen durch die Vorrichtung verarbeitet werden können.

Gemäß einer Ausführungsform umfasst die Erfassungseinrichtung zumindest eine Kamera, insbesondere zumindest eine Videokamera, wobei die biometrischen Merkmale Gesichtsbilder sind. Dadurch wird der Vorteil erreicht, dass die Mehrzahl von biometrischen Merkmalen effizient erfasst werden kann.

Gemäß einer Ausführungsform ist die Erfassungseinrichtung ausgebildet, ein Gruppenbild der Mehrzahl von Personen zu erfassen, und die Mehrzahl von biometrischen Merkmalen auf der Basis des Gruppenbildes zu erfassen. Dadurch wird der Vorteil erreicht, dass die Mehrzahl von biometrischen Merkmalen effizient erfasst werden kann.

Gemäß einer Ausführungsform umfasst die Erfassungseinrichtung zumindest einen Fingerabdruckleser, wobei die biometrischen Merkmale Fingerabdrücke sind. Dadurch wird der Vorteil erreicht, dass die Mehrzahl von biometrischen Merkmalen effizient erfasst werden kann.

Gemäß einer Ausführungsform umfasst die Erfassungseinrichtung zumindest einen Irisscanner, wobei die biometrischen Merkmale Irisbilder sind. Dadurch wird der Vorteil erreicht, dass die Mehrzahl von biometrischen Merkmalen effizient erfasst werden kann.

Gemäß einer Ausführungsform umfasst die Personenzähleinrichtung eine Lichtschranke, eine Personenwaage, eine Dome-Kamera, einen Radar-Sensor, einen Ladar-Sensor, einen einen Ultraschall-Sensor, Infrarot-Sensor, oder eine Time-of-Flight Kamera. Dadurch wird der Vorteil erreicht, dass die erste Personenanzahl effizient bestimmt werden kann.

Die Lichtschranke kann beispielsweise an einer räumlichen Engstelle angeordnet sein. Die Lichtschranke kann das Hindurchtreten von Personen an der Engstelle erfassen, und ein Indikatorsignal erzeugen. Die Personenzähleinrichtung kann folglich auf der Basis des Indikatorsignals die erste Personenanzahl bestimmen.

Die Personenwaage kann beispielsweise in Form einer Bodenmatte ausgebildet oder in eine Bodenmatte integriert sein. Die Personenwaage kann das Gesamtgewicht der Personengruppe bestimmen. Die Personenzähleinrichtung kann folglich auf der Basis des bestimmten Gesamtgewichtes und eines vorbestimmten Referenzpersonengewichts die erste Personenanzahl bestimmen.

Die Dome-Kamera kann beispielsweise über der Personengruppe angeordnet sein. Die Dome-Kamera kann ein Aufsichtbild der Personengruppe bestimmen. Die Personenzähleinrichtung kann folglich auf der Basis des Aufsichtbildes und eines Mustererkennungsalgorithmus die erste Personenanzahl bestimmen. Der Mustererkennungsalgorithmus kann Personenköpfe in dem Aufsichtsbild erkennen.

Der Radar-Sensor (engl. Radar: Radio Detection and Ranging) kann beispielsweise in die Vorrichtung integriert sein. Der Radar-Sensor kann elektromagnetische Wellen in Richtung der Personengruppe aussenden, und reflektierte elektromagnetische Wellen von der Personengruppe empfangen. Der Radar-Sensor kann ferner einzelne Personen in der Personengruppe erfassen. Die Personenzähleinrichtung kann folglich auf der Basis der erfassten einzelnen Personen die erste Personenanzahl bestimmen.

Der Ladar-Sensor (engl. Ladar: Laser Detection and Ranging) kann beispielsweise in die Vorrichtung integriert sein. Der Ladar-Sensor kann Laserstrahlen in Richtung der Personengruppe aussenden, und reflektierte Laserstrahlen von der Personengruppe empfangen. Der Ladar-Sensor kann ferner einzelne Personen in der Personengruppe erfassen. Die Personenzähleinrichtung kann folglich auf der Basis der erfassten einzelnen Personen die erste Personenanzahl bestimmen.

Der Ultraschall-Sensor kann beispielsweise in die Vorrichtung integriert sein. Der Ultraschall-Sensor kann akustische Wellen in Richtung der Personengruppe aussenden, und reflektierte akustische Wellen von der Personengruppe empfangen. Der Ultraschall-Sensor kann ferner einzelne Personen in der Personengruppe erfassen. Die Personenzähleinrichtung kann folglich auf der Basis der erfassten einzelnen Personen die erste Personenanzahl bestimmen.

Der Infrarot-Sensor kann beispielsweise in die Vorrichtung integriert sein. Der Infrarot-Sensor kann infrarotes Licht von der Personengruppe empfangen. Der Infrarot-Sensor kann beispielsweise ein Wärmebild der Personengruppe auf der Basis des empfangenen infraroten Lichts bestimmen. Der Infrarot-Sensor kann ferner einzelne Personen in der Personengruppe erfassen. Die Personenzähleinrichtung kann folglich auf der Basis der erfassten einzelnen Personen die erste Personenanzahl bestimmen.

Die Time-of-Flight Kamera kann beispielsweise in die Vorrichtung integriert sein. Die Time-of-Flight Kamera kann Lichtpulse in Richtung der Personengruppe aussenden, und reflektierte Lichtpulse von der Personengruppe empfangen. Die Time-of-Flight Kamera kann entsprechende Laufzeitdifferenzen auswerten und die Personengruppe drei-dimensional erfassen. Die Time-of-Flight Kamera kann ferner einzelne Personen in der Personengruppe erfassen. Die Personenzähleinrichtung kann folglich auf der Basis der erfassten einzelnen Personen die erste Personenanzahl bestimmen.

Gemäß einer Ausführungsform ist die Erfassungseinrichtung ausgebildet, die Mehrzahl von biometrischen Merkmalen nacheinander zu erfassen. Dadurch wird der Vorteil erreicht, dass die Erfassungseinrichtung besonders einfach implementiert werden kann. Beispielsweise kann lediglich ein Fingerabdruckleser oder lediglich ein Irisscanner eingesetzt werden, um die Fingerabdrücke oder Irisbilder der Personen nacheinander zu erfassen.

Gemäß einer Ausführungsform ist die Erfassungseinrichtung ausgebildet, die Mehrzahl von biometrischen Merkmalen gleichzeitig zu erfassen. Dadurch wird der Vorteil erreicht, dass die Mehrzahl von biometrischen Merkmalen besonders schnell erfasst werden kann. Beispielsweise kann eine Kamera, insbesondere eine Videokamera, zur gleichzeitigen Erfassung von Gesichtsbildern eingesetzt werden.

Gemäß einer Ausführungsform ist die Erfassungseinrichtung ausgebildet, bei der Erfassung jedes biometrischen Merkmals der Mehrzahl von biometrischen Merkmale jeweils einen Erfassungszeitpunkt, insbesondere einen Erfassungszeitstempel, zu bestimmen, und den jeweiligen Erfassungszeitpunkt dem jeweiligen biometrischen Merkmal zuzuordnen. Dadurch wird der Vorteil erreicht, dass eine Zugehörigkeit einer Person zu der Personengruppe bei einer weiteren Verarbeitung bzw. Handhabung der bereitgestellten Mehrzahl von biometrischen Merkmale berücksichtigt werden kann.

Der Erfassungszeitpunkt bzw. der Erfassungszeitstempel kann beispielsweise einen Tag, einen Monat, ein Jahr, und/oder eine Uhrzeit der jeweiligen Erfassung anzeigen.

Die Zutrittskontrollvorrichtung umfasst ferner eine Zutrittsschleuse, welche eine Eingangstür und eine Ausgangstür umfasst, wobei die Personenzähleinrichtung ausgebildet ist, die Anzahl von Personen in der Personengruppe zwischen der Eingangstür und der Ausgangstür zu bestimmen, und wobei die Erfassungseinrichtung ausgebildet ist, die Mehrzahl von Personen zwischen der Eingangstür und der Ausgangstür zu erfassen, und, ansprechend auf die Erfassung der Mehrzahl von Personen zwischen der Eingangstür und der Ausgangstür, die Mehrzahl von biometrischen Merkmalen zu erfassen.

Die Zutrittsschleuse kann die Personengruppe aufnehmen. Hierfür können die Abmessungen der Zutrittsschleuse geeignet gewählt sein. Die Zutrittsschleuse kann ausschließlich der Erfassung der Mehrzahl der biometrischen Merkmale dienen. Die Zutrittsschleuse kann jedoch auch in Form eines Korridors oder eines Windfangs ausgebildet sein.

Gemäß einer Ausführungsform umfasst die Zutrittskontrollvorrichtung ferner eine Datenbank, in welcher eine Mehrzahl von biometrischen Referenzmerkmalen vorgespeichert ist, und eine Authentifizierungseinrichtung, welche ausgebildet ist, die bereitgestellte Mehrzahl von biometrischen Merkmalen mit der vorgespeicherten Mehrzahl von biometrischen Referenzmerkmalen zu vergleichen, und die Personengruppe zu authentifizieren, falls die bereitgestellte Mehrzahl von biometrischen Merkmalen mit der vorgespeicherten Mehrzahl von biometrischen Referenzmerkmalen übereinstimmt. Dadurch wird der Vorteil erreicht, dass eine Authentifizierung der Personengruppe mittels einer jeweiligen Authentifizierung einzelner Personen realisiert werden kann.

Die Zutrittskontrollvorrichtung umfasst ferner einen Signalgeber, welcher ausgebildet ist, ein Signal, insbesondere ein akustisches Signal oder ein visuelles Signal, in Richtung der Personengruppe auszugeben, falls die erste Personenanzahl mit der zweiten Personenanzahl nicht übereinstimmt. Dadurch wird der Vorteil erreicht, dass einzelne Personen, deren biometrisches Merkmal bislang nicht erfasst wurde, zu einer Bewegung veranlasst werden können, wodurch eine nachfolgende Erfassung des biometrischen Merkmals möglich wird. Der Signalgeber kann folglich als Attraktor dienen, um eine Bewegung einzelner Personen der Personengruppe zu bewirken. Der Signalgeber kann beispielsweise einen Lautsprecher umfassen, um ein akustisches Signal auszugeben. Das akustische Signal kann beispielsweise ein Ton, eine Melodie, ein Pfeifen, oder ein Knall sein. Der Signalgeber kann beispielsweise ein Beleuchtungselement, beispielsweise eine LED oder eine Lampe, umfassen, um ein visuelles Signal auszugeben. Das visuelle Signal kann beispielsweise ein Blitzen oder ein Blinken sein. Der Signalgeber kann aber auch ein Display umfassen, um ein visuelles Signal auszugeben. Das visuelle Signal kann beispielsweise ein digitales Bild oder eine Videosequenz sein.

Gemäß einer Ausführungsform ist die Zutrittsschleuse ausgebildet, ansprechend auf die Erfassung der Mehrzahl von Personen zwischen der Eingangstür und der Ausgangstür, die Eingangstür und die Ausgangstür zu verriegeln. Dadurch wird der Vorteil erreicht, dass die Personengruppe in der Zutrittsschleuse zur Erfassung der Mehrzahl von biometrischen Merkmalen festgehalten werden kann. Insbesondere kann dadurch gewährleistet werden, dass keine weiteren Personen in die Zutrittsschleuse eintreten, und keine Personen der Personengruppe die Zutrittsschleuse verlassen.

Gemäß einer Ausführungsform ist die Zutrittsschleuse ausgebildet, die Ausgangstür zu entriegeln, falls die erste Personenanzahl mit der zweiten Personenanzahl übereinstimmt. Dadurch wird der Vorteil erreicht, dass die Personengruppe erst nach einer vollständigen Erfassung der Mehrzahl von biometrischen Merkmalen die Zutrittsschleuse verlassen kann.

Gemäß einem zweiten Aspekt betrifft die Erfindung ein Verfahren zum Bereitstellen einer Mehrzahl von biometrischen Merkmalen einer Mehrzahl von Personen einer Personengruppe, wobei das Verfahren unter Verwendung der Zutrittskontrollvorrichtung durgeführt wird.

Das Verfahren umfasst ein Bestimmen einer Anzahl von Personen in der Personengruppe durch die Personenzähleinrichtung, um eine erste Personenanzahl zu erhalten, ein Erfassen der Mehrzahl von biometrischen Merkmalen durch die Erfassungseinrichtung, ein Vergleichen zumindest zweier biometrischer Merkmale der Mehrzahl von biometrischen Merkmalen durch die Erfassungseinrichtung, ein Bestimmen einer Anzahl unterschiedlicher biometrischer Merkmale in der Mehrzahl von biometrischen Merkmalen durch die Erfassungseinrichtung, um eine zweite Personenanzahl zu erhalten, und ein Bereitstellen der Mehrzahl von biometrischen Merkmalen durch die Erfassungseinrichtung, falls die erste Personenanzahl mit der zweiten Personenanzahl übereinstimmt.

Das Verfahren umfasst ferner ein Ausgeben eines Signals, insbesondere eines akustischen Signals oder eines visuellen Signals, in Richtung der Personengruppe durch den Signalgeber, falls die erste Personenanzahl mit der zweiten Personenanzahl nicht übereinstimmt.

Weitere Merkmale des Verfahrens resultieren unmittelbar aus den Merkmalen oder der Funktionalität der Vorrichtung und/oder der Zutrittskontrollvorrichtung.

Gemäß einem weiteren Aspekt betrifft die Erfindung ein Computerprogramm mit einem Programmcode zum Durchführen des Verfahrens gemäß dem zweiten Aspekt der Erfindung, wenn der Programmcode auf der Zutrittskontrollvorrichtung ausgeführt wird. Die Zutrittskontrollvorrichtung kann programmtechnisch eingerichtet sein, um den Programmcode auszuführen.

Die Erfindung kann in Hardware und/oder in Software realisiert werden.

### BESCHREIBUNG DER FIGUREN

Weitere Ausführungsbeispiele werden bezugnehmend auf die beiliegenden Zeichnungen näher erläutert. Es zeigen:
Fig. 1 ein schematisches Diagramm einer Vorrichtung zum Bereitstellen einer Mehrzahl von biometrischen Merkmalen einer Mehrzahl von Personen einer Personengruppe;
Fig. 2 ein schematisches Diagramm einer Zutrittskontrollvorrichtung zum Kontrollieren eines Zugangs einer Mehrzahl von Personen einer Personengruppe zu einem Zutrittsbereich;
Fig. 3 ein schematisches Diagramm eines Verfahrens zum Bereitstellen einer Mehrzahl von biometrischen Merkmalen einer Mehrzahl von Personen einer Personengruppe;
Fig. 4a ein schematisches Diagramm einer Zutrittskontrollvorrichtung zum Kontrollieren eines Zugangs einer Mehrzahl von Personen einer Personengruppe zu einem Zutrittsbereich;
Fig. 4b ein schematisches Diagramm einer Zutrittskontrollvorrichtung zum Kontrollieren eines Zugangs einer Mehrzahl von Personen einer Personengruppe zu einem Zutrittsbereich; und
Fig. 4c ein schematisches Diagramm einer Zutrittskontrollvorrichtung zum Kontrollieren eines Zugangs einer Mehrzahl von Personen einer Personengruppe zu einem Zutrittsbereich.

### DETAILIERTE BESCHREIBUNG DER FIGUREN

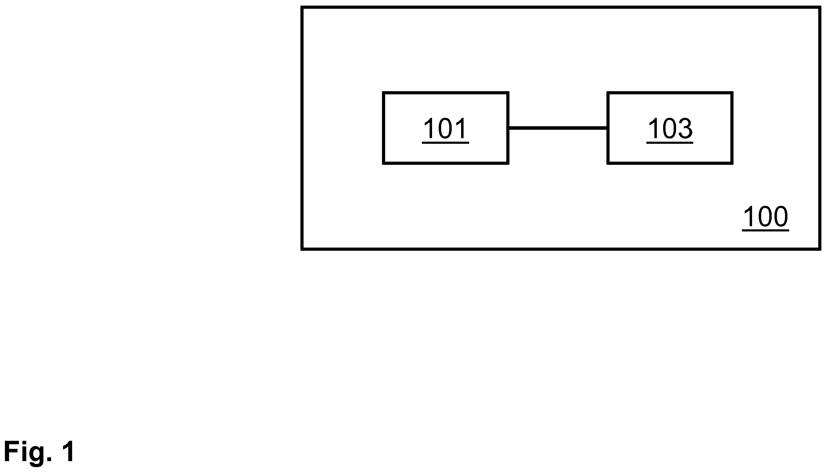

Fig. 1 zeigt ein schematisches Diagramm einer Vorrichtung 100 zum Bereitstellen einer Mehrzahl von biometrischen Merkmalen einer Mehrzahl von Personen einer Personengruppe, wobei jeder Person ein biometrisches Merkmal zugeordnet ist.

Die Vorrichtung 100 umfasst eine Personenzähleinrichtung 101, welche ausgebildet ist, eine Anzahl von Personen in der Personengruppe zu bestimmen, um eine erste Personenanzahl zu erhalten. Die Personenzähleinrichtung 101 kann auf verschiedene Weise implementiert werden. Beispielsweise kann die Personenzähleinrichtung 101 eine Lichtschranke, eine Personenwaage, eine Dome-Kamera, einen Radar-Sensor, einen Ladar-Sensor, einen Ultraschall-Sensor, einen Infrarot-Sensor, oder eine Time-of-Flight Kamera umfassen, um die erste Personenanzahl zu bestimmen.

Die Vorrichtung umfasst ferner eine Erfassungseinrichtung 103, welche ausgebildet ist, die Mehrzahl von biometrischen Merkmalen zu erfassen, zumindest zwei biometrische Merkmale der Mehrzahl von biometrischen Merkmalen zu vergleichen, eine Anzahl unterschiedlicher biometrischer Merkmale in der Mehrzahl von biometrischen Merkmalen zu bestimmen, um eine zweite Personenanzahl zu erhalten, und die Mehrzahl von biometrischen Merkmalen bereitzustellen, falls die erste Personenanzahl mit der zweiten Personenanzahl übereinstimmt. Die Erfassungseinrichtung 103 kann ausgebildet sein, die Mehrzahl von biometrischen Merkmalen nicht bereitzustellen, falls die erste Personenanzahl mit der zweiten Personenanzahl nicht übereinstimmt.

Die Erfassung der Mehrzahl von biometrischen Merkmale kann auf unterschiedliche Weise erfolgen. Beispielsweise kann die Erfassungseinrichtung 103 zumindest eine Kamera, insbesondere zumindest eine Videokamera, umfassen, wobei die biometrischen Merkmale Gesichtsbilder sind. In diesem Fall kann die Erfassungseinrichtung 103 ausgebildet sein, ein Gruppenbild der Personengruppe zu erfassen, und die Mehrzahl von biometrischen Merkmalen auf der Basis des Gruppenbildes zu erfassen. Alternativ kann die Erfassungseinrichtung 103 zumindest einen Fingerabdruckleser umfassen, wobei die biometrischen Merkmale Fingerabdrücke sind. Alternativ kann die Erfassungseinrichtung 103 zumindest einen Irisscanner umfassen, wobei die biometrischen Merkmale Irisbilder sind.

Die Vorrichtung 100 kann beispielsweise an einem Ort eingesetzt werden, an welchem die Personen ohnehin einer Überwachung, beispielsweise mittels zumindest einer Kamera, unterliegen, beispielsweise in einem Supermarkt, einem Ladengeschäft oder einer Bibliothek. Zumeist wird an derartigen Orten die Überwachung der Personen durch Personal übernommen. Die Vorrichtung 100 erlaubt es, auch diese Aufgabe zu automatisieren, wodurch ein zumindest zeitweiser personalfreier Betrieb ermöglicht wird. So kann beispielsweise die Öffnung von kleineren Supermärkten nachts oder an Wochenenden ermöglicht werden. Zudem erlaubt die Vorrichtung 100 auch den Betrieb einer Zutrittskontrollvorrichtung, beispielsweise eines ABC-Gates, für Familien und andere Personengruppen. Eine weitere Anwendung ist die Überwachung gleichzeitig anwesender Personen in bestimmten Bereichen etwa von Museen, in denen sich nur eine bestimmte Anzahl von Personen gleichzeitig aufhalten darf.

Zusammenfassend lässt sich durch die Vorrichtung 100 die Vereinzelung von Personen vermeiden, da eine Mehrzahl von biometrischen Merkmalen einer Mehrzahl von Personen gleichzeitig bereitgestellt werden kann.

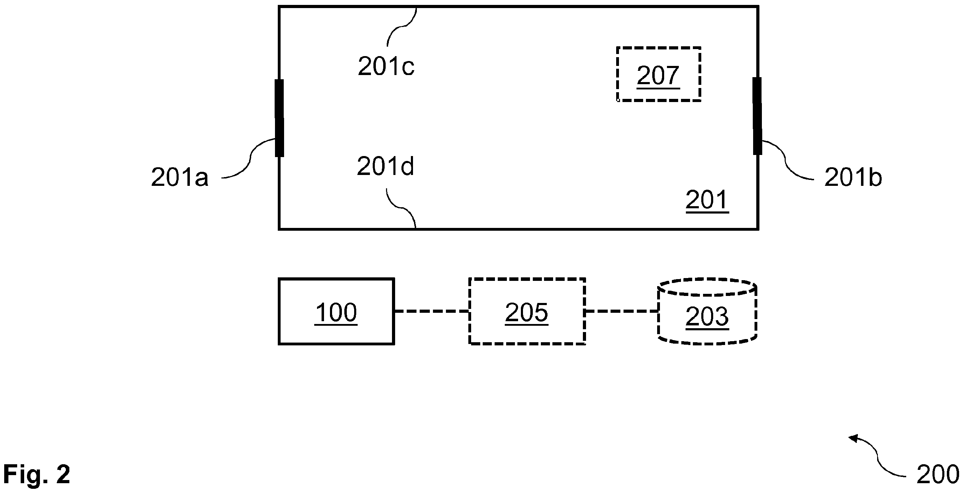

Fig. 2 zeigt ein schematisches Diagramm einer Zutrittskontrollvorrichtung 200 zum Kontrollieren eines Zugangs einer Mehrzahl von Personen einer Personengruppe zu einem Zutrittsbereich. Die Zutrittskontrollvorrichtung 200 umfasst eine Vorrichtung 100 sowie eine Zutrittsschleuse 201, welche eine Eingangstür 201a, eine Ausgangstür 201b, eine erste Schleusenwand 201c und eine zweite Schleusenwand 201d umfasst. Der Zutrittsbereich kann sich hinter der Ausgangstür 201b befinden. Die Personenzähleinrichtung ist ausgebildet, die Anzahl von Personen in der Personengruppe zwischen der Eingangstür 201a und der Ausgangstür 201b zu bestimmen, wobei die Erfassungseinrichtung ausgebildet ist, die Mehrzahl von Personen zwischen der Eingangstür 201a und der Ausgangstür 201b zu erfassen, und, ansprechend auf die Erfassung der Mehrzahl von Personen zwischen der Eingangstür 201a und der Ausgangstür 201b, die Mehrzahl von biometrischen Merkmalen zu erfassen.

Die Zutrittskontrollvorrichtung 200 kann ferner eine Datenbank 203 umfassen, in welcher eine Mehrzahl von biometrischen Referenzmerkmalen vorgespeichert ist. Die Zutrittskontrollvorrichtung 200 kann ferner eine Authentifizierungseinrichtung 205 umfassen, welche ausgebildet ist, die bereitgestellte Mehrzahl von biometrischen Merkmalen mit der vorgespeicherten Mehrzahl von biometrischen Referenzmerkmalen zu vergleichen, und die Personengruppe zu authentifizieren, falls die bereitgestellte Mehrzahl von biometrischen Merkmalen mit der vorgespeicherten Mehrzahl von biometrischen Referenzmerkmalen übereinstimmt. Die Zutrittskontrollvorrichtung 200 umfasst ferner einen Signalgeber 207, welcher ausgebildet ist, ein Signal, insbesondere ein akustisches Signal oder ein visuelles Signal, in Richtung der Personengruppe auszugeben, falls die erste Personenanzahl mit der zweiten Personenanzahl nicht übereinstimmt.

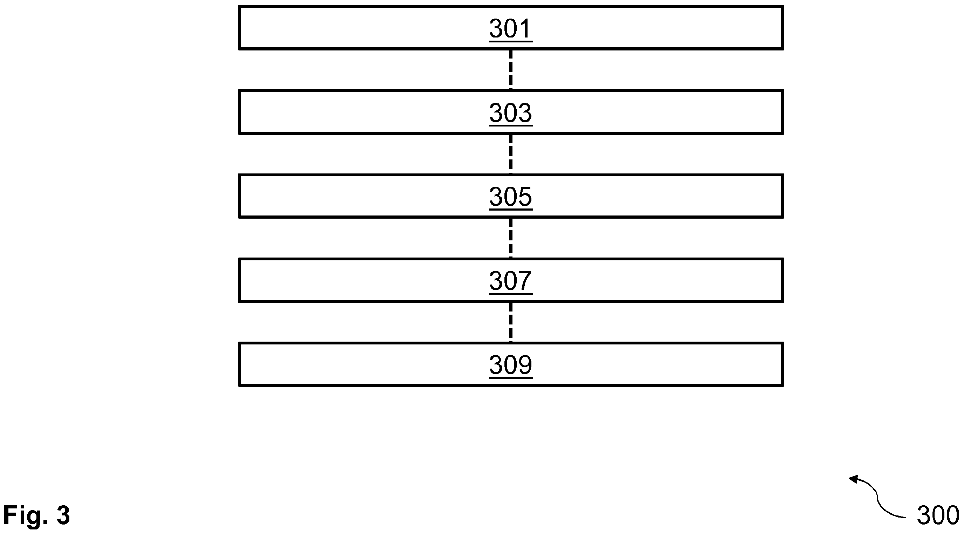

Fig. 3 zeigt ein schematisches Diagramm eines Verfahrens 300 zum Bereitstellen einer Mehrzahl von biometrischen Merkmalen einer Mehrzahl von Personen einer Personengruppe, wobei das Verfahren 300 unter Verwendung einer Vorrichtung mit einer Personenzähleinrichtung und einer Erfassungseinrichtung durchführbar ist, und wobei jeder Person ein biometrisches Merkmal zugeordnet ist.

Das Verfahren 300 umfasst ein Bestimmen 301 einer Anzahl von Personen in der Personengruppe durch die Personenzähleinrichtung, um eine erste Personenanzahl zu erhalten, ein Erfassen 303 der Mehrzahl von biometrischen Merkmalen durch die Erfassungseinrichtung, ein Vergleichen 305 zumindest zweier biometrischer Merkmale der Mehrzahl von biometrischen Merkmalen durch die Erfassungseinrichtung, ein Bestimmen 307 einer Anzahl unterschiedlicher biometrischer Merkmale in der Mehrzahl von biometrischen Merkmalen durch die Erfassungseinrichtung, um eine zweite Personenanzahl zu erhalten, und ein Bereitstellen 309 der Mehrzahl von biometrischen Merkmalen durch die Erfassungseinrichtung, falls die erste Personenanzahl mit der zweiten Personenanzahl übereinstimmt.

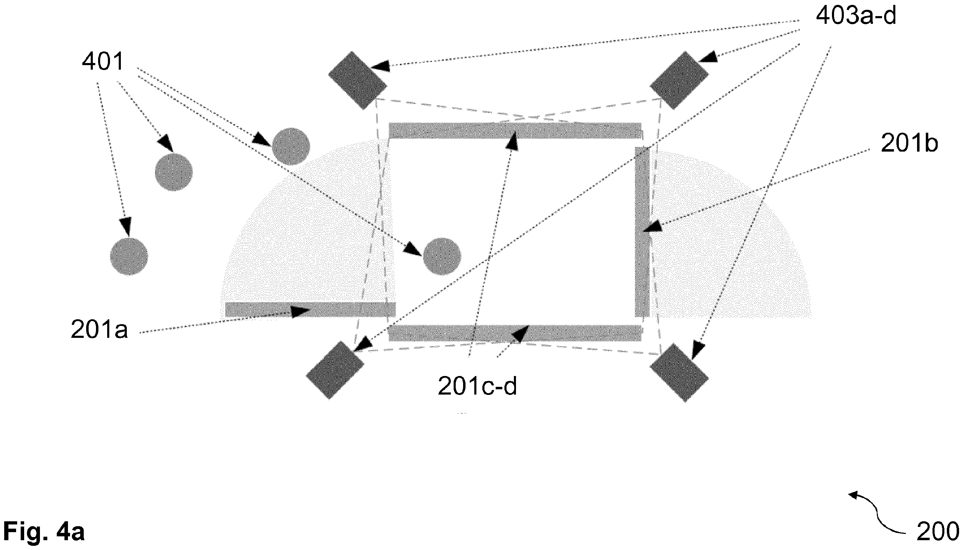

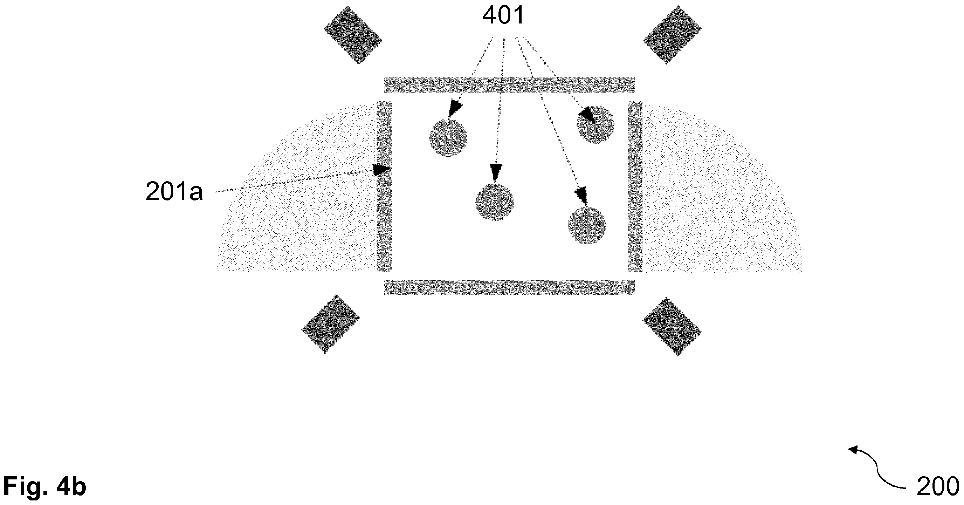

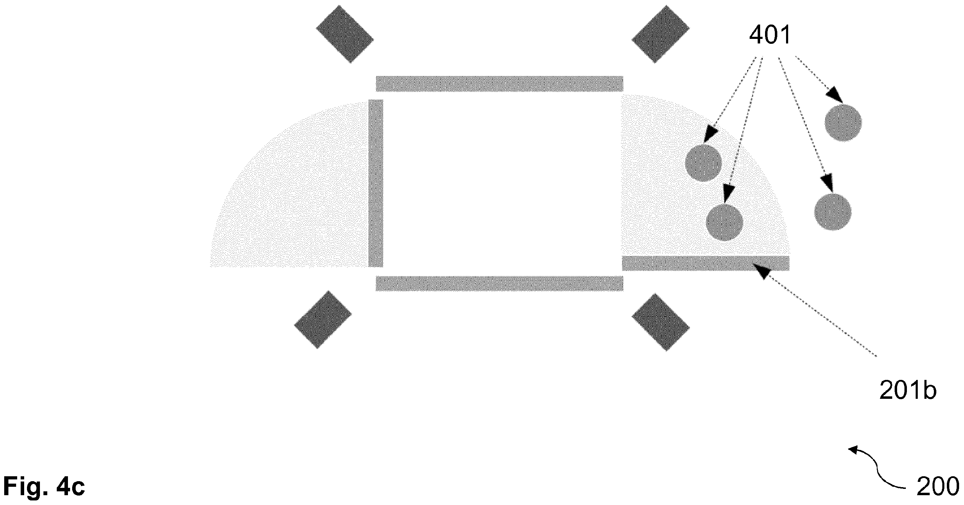

Fig. 4a bis Fig. 4c zeigen jeweils ein schematisches Diagramm einer Zutrittskontrollvorrichtung 200 zum Kontrollieren eines Zugangs einer Mehrzahl von Personen einer Personengruppe 401 zu einem Zutrittsbereich. Die Personengruppe 401 besteht exemplarisch aus vier Personen.

Die Zutrittskontrollvorrichtung 200 umfasst eine Vorrichtung sowie eine Zutrittsschleuse, welche eine Eingangstür 201a, eine Ausgangstür 201b, eine erste Schleusenwand 201c und eine zweite Schleusenwand 201d umfasst. Die Personenzähleinrichtung ist ausgebildet, die Anzahl von Personen in der Personengruppe zwischen der Eingangstür 201a und der Ausgangstür 201b zu bestimmen, wobei die Erfassungseinrichtung ausgebildet ist, die Mehrzahl von Personen zwischen der Eingangstür 201a und der Ausgangstür 201b zu erfassen, und, ansprechend auf die Erfassung der Mehrzahl von Personen zwischen der Eingangstür 201a und der Ausgangstür 201b, die Mehrzahl von biometrischen Merkmalen zu erfassen. Die Erfassungseinrichtung umfasst exemplarisch vier Kameras 403a-d, welche beispielsweise als Videokameras ausgebildet sein können. Bei den erfassten biometrischen Merkmalen handelt es sich exemplarisch um Gesichtsbilder der Personen.

Die Zutrittskontrollvorrichtung 200 kann beispielsweise an einem Korridor oder einem Windfang eines Eingangsbereiches oder einer anderen schleusenartigen baulichen Struktur angeordnet sein. Die Zutrittsschleuse kann derart dimensioniert sein, dass die Personengruppe 401, etwa eine Familie, gleichzeitig hineinpasst. Die Eingangstür 201a und die Ausgangstür 201b können derart angesteuert werden, dass außer in Notfällen niemals beide Türen 201a, 201b gleichzeitig entriegelt sind.

Der Zugang der Personengruppe 401 kann beispielsweise folgendermaßen kontrolliert werden. Die Eingangstür 201a wird entriegelt bzw. geöffnet, und die Personengruppe 401 geht in die Zutrittsschleuse. Die Eingangstür 201a wird verriegelt bzw. geschlossen. Die Personenzähleinrichtung erfasst die Anzahl der Personen in der Zutrittsschleuse zwischen der Eingangstür 201a und der Ausgangstür 201b. Die Erfassungseinrichtung mit den Kameras 403a-d, welche die Zutrittsschleuse beispielsweise aus allen Richtungen abdecken, erfassen eines oder mehrere Gesichtsbilder der Gesichter aller Personen in der Zutrittsschleuse. Die Kameras 403a-d können beispielsweise Videokameras sein und Videos erfassen. Aus den jeweiligen Videos können die Gesichtsbilder extrahiert werden. Die Erfassungseinrichtung kann ferner zur Präsentationsangriffserkennung (engl. Presentation Attack Detection) eingesetzt werden. Die Erfassungseinrichtung prüft anschließend, ob für N Personen in der Zutrittsschleuse auch Gesichtsbilder von N verschiedenen Personen erfasst worden sind. Die jeweils qualitativ besten Gesichtsbilder dieser N Personen können jeweils aus allen erfassten Gesichtsbildern ausgewählt werden. Ferner kann eine Registrierung der jeweiligen ausgewählten Gesichtsbilder mit einem jeweiligen Erfassungszeitstempel in einer Datenbank, beispielsweise in Form einer Tabelle, erfolgen. Fehlt ein Gesichtsbild einer Person, so kann über den Signalgeber erreicht werden, dass die betreffende Person auch in eine der Kameras 403a-d schaut und alle fehlenden Gesichtsbilder erfasst werden. Sind die jeweiligen biometrischen Merkmale aller Personen der Personengruppe 401 erfasst worden, so entriegelt bzw. öffnet sich die Ausgangstür 201b, und die Personengruppe 401 verlässt die Zutrittsschleuse.

Die Personengruppe 401 kann nun ihre Angelegenheiten innerhalb des Zutrittsbereichs erledigen, beispielsweise einkaufen. Gegebenenfalls können die erfassten biometrischen Merkmale beispielsweise für die Verfolgung (engl. Tracking) der Personen im Zutrittsbereich benutzt werden. Außerdem können gegebenenfalls Bezahlinformationen von Selbstbedienungskassen mit den Gesichtsbildern verknüpft werden. Nach erfolgter Erledigung der Angelegenheiten verlässt die Personengruppe 401 den Zutrittsbereich.

Die Personengruppe 401 kann den Zutrittsbereich beispielsweise durch eine weitere Zutrittsschleuse verlassen, welche dieselben Merkmale bzw. Funktionalitäten wie die Zutrittsschleuse aufweist, mittels welcher sie den Zutrittsbereich betreten hat.

Die Personengruppe 401 kann den Zutrittsbereich jedoch auch durch dieselbe Zutrittsschleuse verlassen, mittels welcher sie den Zutrittsbereich betreten hat, wobei die Rollen der Eingangstür und Ausgangstür entsprechend vertauscht sind, d.h. die Eingangstür wird durch die vormalige Ausgangstür 201b gebildet, und die Ausgangstür wird durch die vormalige Eingangstür 201a gebildet. Beispielsweise entriegelt bzw. öffnet sich die vormalige Ausgangstür 201b, und die Personengruppe 401 geht in die Zutrittsschleuse. Die vormalige Ausgangstür 201b wird verriegelt bzw. geschlossen, die Personenzähleinrichtung zählt die Personen in der Zutrittsschleuse, die Erfassungseinrichtung erfasst für jede Person der Personengruppe 401 mindestens ein Gesichtsbild, die Gesichtsbilder werden wiederum mit einem Erfassungszeitstempel in der Datenbank eingetragen, und die Gesichtsbilder werden mit den zuvor erfassten Gesichtsbildern, welche als biometrische Referenzmerkmale dienen können, verglichen bzw. diesen zugeordnet. Die Personen können beispielsweise als deregistriert gekennzeichnet werden. Damit kann zugleich eine Liste der sich aktuell im Zutrittsbereich befindlichen Personen bzw. ihrer Gesichtsbilder geführt werden. Anschließend öffnet sich die vormalige Eingangstür 201a und die Personengruppe 401 verlässt die Zutrittsschleuse. Nach Ablauf einer vorbestimmten Zeit, beispielsweise nach 24 Stunden, können die Gesichtsbilder aus der Datenbank gelöscht werden. Dadurch kann zudem gewährleistet werden, dass der Betrieb, beispielsweise der Supermarkt, das Ladengeschäft oder die Bibliothek, erst dann automatisiert abgeschlossen wird, wenn alle Personen den Zutrittsbereich verlassen haben.

Das beschriebene Beispiel stellt auf die Verwendung von Gesichtsbildern als biometrische Merkmale ab. Alternativ können jedoch auch andere Arten biometrischer Merkmale erfasst werden, beispielsweise Fingerabdrücke oder Irisbilder, welche sich ebenfalls intuitiv, bequem und schnell erfassen lassen. Die Erfassung der Mehrzahl von biometrischen Merkmalen kann kontaktlos oder kontaktbehaftet erfolgen.

Um Gesichtsbilder als biometrische Merkmale in ausreichender Qualität in der Zutrittsschleuse zu erfassen, können die Personen mittels eines Signalgebers aufgefordert bzw. veranlasst werden, beispielsweise Vermummungen durch Schals, Sonnenbrillen oder Mützen zu entfernen. Dies kann durch eine geeignete Benutzerführung mittels des Signalgebers geschehen. Ferner kann dadurch gewährleistet werden, dass alle Personen in die Kameras 403a-d schauen. Zudem kann es zweckmäßig sein, die Kameras 403a-d um die Zutrittsschleuse herum anzuordnen. Ferner kann es zweckmäßig sein, die Kameras 403a-d von schräg oben in die Zutrittsschleuse zu richten. Die Kameras 403a-d können ferner in der Nähe des Signalgebers angeordnet werden. Der Signalgeber kann beispielsweise ein Display umfassen, welches eine Videosequenz abspielt, welche für verschiedene Altersgruppen interessant sein könnte.

Zudem ist es möglich, mit der Erfassung der Mehrzahl von biometrischen Merkmalen bereits beim Hereingehen der Mehrzahl von Personen in die Zutrittsschleuse zu beginnen. In diesem Fall können weitere Faktoren, beispielsweise Soft-Biometric-Faktoren, herangezogen werden, um zu gewährleisten, dass die erfassten Gesichtsbilder tatsächlich zu den Personen der Personengruppe 401 in der Zutrittsschleuse gehören.

Zusammenfassend wird eine einfache und aufwandsarme Zugangskontrolle für beliebige Personen einer Personengruppe 401 ermöglicht. Das Konzept eignet sich zur Verwendung in einer Zutrittskontrollvorrichtung 200 für kleinere Personengruppen, wie zum Beispiel Familien und begleitete behinderte Personen, bei der automatisierten Grenzkontrolle. Zudem kann für zugangsregulierte Bereiche eine biometrische Registrierung und De-Registrierung von unangemeldeten Besuchern bzw. Besuchergruppen durchgeführt werden.

### BEZUGSZEICHENLISTE

- 100: Vorrichtung
- 101: Personenzähleinrichtung
- 103: Erfassungseinrichtung

- 200: Zutrittskontrollvorrichtung
- 201: Zutrittsschleuse
- 201a: Eingangstür
- 201b: Ausgangstür
- 201c: Schleusenwand
- 201d: Schleusenwand
- 203: Datenbank
- 205: Authentifizierungseinrichtung
- 207: Signalgeber

- 300: Verfahren
- 301: Bestimmen
- 303: Erfassen
- 305: Vergleichen
- 307: Bestimmen
- 309: Bereitstellen

- 401: Personengruppe
- 403a: Kamera
- 403b: Kamera
- 403c: Kamera
- 403d: Kamera

## Patentansprüche

1. Zutrittskontrollvorrichtung (200) zum Kontrollieren eines Zugangs einer Mehrzahl von Personen einer Personengruppe zu einem Zutrittsbereich, mit:
einer Vorrichtung (100) zum Bereitstellen einer Mehrzahl von biometrischen Merkmalen einer Mehrzahl von Personen einer Personengruppe (401), wobei jeder Person ein biometrisches Merkmal zugeordnet ist, die Vorrichtung (100) umfassend:
eine Personenzähleinrichtung (101), welche ausgebildet ist, eine Anzahl von Personen in der Personengruppe (401) zu bestimmen, um eine erste Personenanzahl zu erhalten; und
eine Erfassungseinrichtung (103), welche ausgebildet ist, die Mehrzahl von biometrischen Merkmalen zu erfassen, zumindest zwei biometrische Merkmale der Mehrzahl von biometrischen Merkmalen zu vergleichen, eine Anzahl unterschiedlicher biometrischer Merkmale in der Mehrzahl von biometrischen Merkmalen zu bestimmen, um eine zweite Personenanzahl zu erhalten, und die Mehrzahl von biometrischen Merkmalen zur weiteren Verarbeitung bereitzustellen, falls die erste Personenanzahl mit der zweiten Personenanzahl übereinstimmt;
die Zutrittskontrollvorrichtung (200) weiter umfassend:
eine Zutrittsschleuse (201), welche eine Eingangstür (201a) und eine Ausgangstür (201b) umfasst;
wobei die Personenzähleinrichtung (101) ausgebildet ist, die Anzahl von Personen in der Personengruppe (401) zwischen der Eingangstür (201a) und der Ausgangstür (201b) zu bestimmen;
wobei die Erfassungseinrichtung (103) ausgebildet ist, die Mehrzahl von Personen zwischen der Eingangstür (201a) und der Ausgangstür (201b) zu erfassen, und, ansprechend auf die Erfassung der Mehrzahl von Personen zwischen der Eingangstür (201a) und der Ausgangstür (201b), die Mehrzahl von biometrischen Merkmalen zu erfassen; und
**dadurch gekennzeichnet, dass** die Zutrittskontrollvorrichtung (200) einen Signalgeber (207) umfasst, welcher ausgebildet ist, ein Signal, insbesondere ein akustisches Signal oder ein visuelles Signal, in Richtung der Personengruppe (401) auszugeben, falls die erste Personenanzahl mit der zweiten Personenanzahl nicht übereinstimmt.

2. Zutrittskontrollvorrichtung (200) nach Anspruch 1, wobei die Erfassungseinrichtung (103) zumindest eine Kamera (403a-d), insbesondere zumindest eine Videokamera, umfasst, und wobei die biometrischen Merkmale Gesichtsbilder sind.

3. Zutrittskontrollvorrichtung (200) nach Anspruch 2, wobei die Erfassungseinrichtung (103) ausgebildet ist, ein Gruppenbild der Mehrzahl von Personen zu erfassen, und die Mehrzahl von biometrischen Merkmalen auf der Basis des Gruppenbildes zu erfassen.

4. Zutrittskontrollvorrichtung (200) nach Anspruch 1, wobei die Erfassungseinrichtung (103) zumindest einen Fingerabdruckleser umfasst, und wobei die biometrischen Merkmale Fingerabdrücke sind.

5. Zutrittskontrollvorrichtung (200) nach Anspruch 1, wobei die Erfassungseinrichtung (103) zumindest einen Irisscanner umfasst, und wobei die biometrischen Merkmale Irisbilder sind.

6. Zutrittskontrollvorrichtung (200) nach einem der vorstehenden Ansprüche, wobei die Personenzähleinrichtung (101) eine Lichtschranke, eine Personenwaage, eine Dome-Kamera, einen Radar-Sensor, einen Ladar-Sensor, einen Ultraschall-Sensor, einen Infrarot-Sensor, oder eine Time-of-Flight Kamera umfasst.

7. Zutrittskontrollvorrichtung (200) nach einem der vorstehenden Ansprüche, wobei die Erfassungseinrichtung (103) ausgebildet ist, bei der Erfassung jedes biometrischen Merkmals der Mehrzahl von biometrischen Merkmale jeweils einen Erfassungszeitpunkt, insbesondere einen Erfassungszeitstempel, zu bestimmen, und den jeweiligen Erfassungszeitpunkt dem jeweiligen biometrischen Merkmal zuzuordnen.

8. Zutrittskontrollvorrichtung (200) nach einem der vorstehenden Ansprüche, mit:
einer Datenbank (203), in welcher eine Mehrzahl von biometrischen Referenzmerkmalen vorgespeichert ist; und
einer Authentifizierungseinrichtung (205), welche ausgebildet ist, die bereitgestellte Mehrzahl von biometrischen Merkmalen mit der vorgespeicherten Mehrzahl von biometrischen Referenzmerkmalen zu vergleichen, und die Personengruppe (401) zu authentifizieren, falls die bereitgestellte Mehrzahl von biometrischen Merkmalen mit der vorgespeicherten Mehrzahl von biometrischen Referenzmerkmalen übereinstimmt.

9. Zutrittskontrollvorrichtung (200) nach einem der vorstehenden Ansprüche, wobei die Zutrittsschleuse (201) ausgebildet ist, die Ausgangstür (201b) zu entriegeln, falls die erste Personenanzahl mit der zweiten Personenanzahl übereinstimmt.

10. Verfahren (300) zum Bereitstellen einer Mehrzahl von biometrischen Merkmalen einer Mehrzahl von Personen einer Personengruppe, wobei das Verfahren (300) unter Verwendung der Zutrittskontrollvorrichtung (200) nach einem der vorstehenden Ansprüche durchgeführt wird, mit:
Bestimmen (301) einer Anzahl von Personen in der Personengruppe (401) durch die Personenzähleinrichtung (101), um eine erste Personenanzahl zu erhalten;
Erfassen (303) der Mehrzahl von biometrischen Merkmalen durch die Erfassungseinrichtung (103);
Vergleichen (305) zumindest zweier biometrischer Merkmale der Mehrzahl von biometrischen Merkmalen durch die Erfassungseinrichtung (103);
Bestimmen (307) einer Anzahl unterschiedlicher biometrischer Merkmale in der Mehrzahl von biometrischen Merkmalen durch die Erfassungseinrichtung (103), um eine zweite Personenanzahl zu erhalten; und
Bereitstellen (309) der Mehrzahl von biometrischen Merkmalen zur weiteren Verarbeitung durch die Erfassungseinrichtung (103), falls die erste Personenanzahl mit der zweiten Personenanzahl übereinstimmt;
**dadurch gekennzeichnet, dass** das Verfahren (300) ein Ausgeben eines Signals, insbesondere eines akustischen Signals oder eines visuellen Signals, in Richtung der Personengruppe (401) durch den Signalgeber (207) umfasst, falls die erste Personenanzahl mit der zweiten Personenanzahl nicht übereinstimmt.

11. Computerprogramm mit einem Programmcode zum Durchführen des Verfahrens (300) nach Anspruch 10, wenn der Programmcode auf der Zutrittskontrollvorrichtung (200) nach einem der Ansprüche 1 bis 9 ausgeführt wird.

## Claims

1. An access control device (200) for controlling an access of a plurality of persons of a group of persons to an access area, comprising:
a device (100) for providing a plurality of biometric features of a plurality of persons of a group of persons (401), wherein each person is assigned a biometric feature, wherein the device (100) comprises:
a person counting device (101), which is configured to determine a number of persons in the group of persons (401) in order to obtain a first number of persons; and
a detection device (103), which is configured to detect the plurality of biometric features, to compare at least two biometric features of the plurality of biometric features, to determine a number of different biometric features in the plurality of biometric features in order to obtain a second number of persons, and to provide the plurality of biometric features for further processing, if the first number of persons matches the second number of persons;
the access control device (200) further comprising:
an access gate (201), which comprises an entry door (201a) and an exit door (201b);
wherein the person counting device (101) is configured to determine the number of persons in the group of persons (401) between the entry door (201a) and the exit door (201b);
wherein the detection device (103) is configured to detect the plurality of persons between the entry door (201a) and the exit door (201b), and, in response to the detection of the plurality of persons between the entry door (201a) and the exit door (201b), to detect the plurality of biometric features; and
**characterized in that** the access control device (200) comprises a signal transmitter (207), which is configured to emit a signal, in particular an acoustic signal or a visual signal, in direction of the group of persons (401), if the first number of persons does not match the second number of persons.

2. The access control device (200) according to claim 1, wherein the detection device (103) comprises at least one camera (403a-d), in particular at least one video camera, and wherein the biometric features are facial images.

3. The access control device (200) according to claim 2, wherein the detection device (103) is configured to capture a group image of the plurality of persons and to capture the plurality of biometric features on the basis of the group image.

4. The access control device (200) according to claim 1, wherein the detection device (103) comprises at least one fingerprint reader, and wherein the biometric features are fingerprints.

5. The access control device (200) according to claim 1, wherein the detection device (103) comprises at least one iris scanner, and wherein the biometric features are iris images.

6. The access control device (200) according to any one of the preceding claims, wherein the person counting device (101) comprises a light barrier, a personal scale, a dome camera, a radar sensor, a ladar sensor, an ultrasonic sensor, an infrared sensor, or a time-of-flight camera.

7. The access control device (200) according to any one of the preceding claims, wherein the detection device (103) is configured to determine a detection time, in particular a detection time stamp, during the detection of each biometric feature of the plurality of biometric features, and to assign the respective detection time to the respective biometric feature.

8. The access control device (200) according to any one of the preceding claims, comprising:
a database (203), in which a plurality of biometric reference features is pre-stored; and
an authentication device (205), which is configured to compare the provided plurality of biometric features with the pre-stored plurality of biometric reference features, and to authenticate the group of persons (401), if the provided plurality of biometric features matches the pre-stored plurality of biometric reference features.

9. The access control device (200) according to any one of the preceding claims, wherein the access gate (201) is configured to unlock the exit door (201b), if the first number of persons matches the second number of persons.

10. A method (300) for providing a plurality of biometric features of a plurality of persons of a group of persons, wherein the method (300) is carried out using the access control device (200) according to any one of the preceding claims, comprising:
determining (301) a number of persons in the group of persons (401) by the person counting device (101) to obtain a first number of persons;
detecting (303) the plurality of biometric features by the detection device (103);
comparing (305) at least two biometric features of the plurality of biometric features by the detection device (103);
determining (307) a number of different biometric features in the plurality of biometric features to obtain a second number of persons by the detection device (103); and
providing (309) the plurality of biometric features for further processing by the detection device (103), if the first number of persons matches the second number of persons;
**characterized in that** the method (300) comprises emitting a signal, in particular an acoustic signal or a visual signal, in direction of the group of persons (401) by the signal transmitter (207), if the first number of persons does not match the second number of persons.

11. A computer program comprising a program code for carrying out the method (300) according to claim 10, when the program code is executed on the access control device (200) according to any one of the claims 1 to 9.

## Revendications

1. Dispositif de contrôle d'accès (200) pour contrôler l'accès d'une pluralité de personnes d'un groupe de personnes à une zone d'accès, comprenant:
un dispositif (100) pour fournir une pluralité de caractéristiques biométriques d'une pluralité de personnes dans un groupe de personnes (401), dans lequel chaque personne se voit attribuer une caractéristique biométrique, le dispositif (100) comprenant:
un dispositif de comptage de personnes (101), qui est configuré pour déterminer un nombre de personnes dans le groupe de personnes (401) afin d'obtenir un premier nombre de personnes; et
un dispositif de détection (103), qui est configuré pour détecter la pluralité de caractéristiques biométriques, pour comparer au moins deux caractéristiques biométriques de la pluralité de caractéristiques biométriques, pour déterminer un certain nombre de caractéristiques biométriques différentes dans la pluralité de caractéristiques biométriques afin d'obtenir un deuxième nombre de personnes, et pour fournir la pluralité de caractéristiques biométriques pour un traitement ultérieur si le premier nombre de personnes correspond au deuxième nombre de personnes;
le dispositif de contrôle d'accès (200) comprenant en outre:
une porte d'accès (201), qui comprend une porte d'entrée (201a) et une porte de sortie (201b);
dans lequel le dispositif de comptage de personnes (101) est configuré pour déterminer le nombre de personnes dans le groupe de personnes (401) entre la porte d'entrée (201a) et la porte de sortie (201b);
dans lequel le dispositif de détection (103) est configuré pour détecter la pluralité de personnes entre la porte d'entrée (201a) et la porte de sortie (201b), et, en réponse à la détection de la pluralité de personnes entre la porte d'entrée (201a) et la porte de sortie (201b), pour détecter la pluralité de caractéristiques biométriques; et
**caractérisé en ce que** le dispositif de contrôle d'accès (200) comprend un émetteur de signal (207) qui est configuré pour émettre un signal, notamment un signal acoustique ou un signal visuel, en direction du groupe de personnes (401) si le premier numéro de personnes ne correspond pas au deuxième nombre de personnes.

2. Dispositif de contrôle d'accès (200) selon la revendication 1, dans lequel le dispositif de détection (103) comprend au moins une caméra (403a-d), notamment au moins une caméra vidéo, et dans lequel les caractéristiques biométriques sont des images faciales.

3. Dispositif de contrôle d'accès (200) selon la revendication 2, dans lequel le dispositif de détection (103) est configuré pour capturer une image de groupe de la pluralité de personnes et pour capturer la pluralité de caractéristiques biométriques sur la base de l'image de groupe.

4. Dispositif de contrôle d'accès (200) selon la revendication 1, dans lequel le dispositif de détection (103) comprend au moins un lecteur d'empreintes digitales, et dans lequel les caractéristiques biométriques sont des empreintes digitales.

5. Dispositif de contrôle d'accès (200) selon la revendication 1, dans lequel le dispositif de détection (103) comprend au moins un scanner d'iris, et dans lequel les caractéristiques biométriques sont des images d'iris.

6. Dispositif de contrôle d'accès (200) selon l'une quelconque des revendications précédentes, dans lequel le dispositif de comptage de personnes (101) comprend une barrière lumineuse, une balance personnelle, une caméra dôme, un capteur radar, un capteur ladar, un capteur à ultrasons, un capteur infrarouge ou une caméra de temps de vol.

7. Dispositif de contrôle d'accès (200) selon l'une quelconque des revendications précédentes, dans lequel le dispositif de détection (103) est configuré pour déterminer un instant de détection, notamment un horodatage de détection, lors de la détection de chaque caractéristique biométrique de la pluralité de caractéristiques biométriques et d'attribuer le temps de détection respectif à la caractéristique biométrique respective.

8. Dispositif de contrôle d'accès (200) selon l'une quelconque des revendications précédentes, comprenant:
une base de données (203), dans laquelle une pluralité de caractéristiques de référence biométriques sont pré-stockées; et
un dispositif d'authentification (205), qui est configuré pour comparer la pluralité fournie de caractéristiques biométriques avec la pluralité pré-stockée de caractéristiques biométriques de référence, et pour authentifier le groupe de personnes (401) si la pluralité fournie de caractéristiques biométriques correspond aux pré-stockées pluralité stockée de caractéristiques de référence biométriques.

9. Dispositif de contrôle d'accès (200) selon l'une quelconque des revendications précédentes, dans lequel la porte d'accès (201) est configurée pour déverrouiller la porte de sortie (201b) si le premier nombre de personnes correspond au deuxième nombre de personnes.

10. Procédé (300) pour fournir une pluralité de caractéristiques biométriques d'une pluralité de personnes dans un groupe de personnes, dans lequel le procédé (300) est réalisé en utilisant le dispositif de contrôle d'accès (200) selon l'une quelconque des revendications précédentes, comprenant:
déterminer (301) un nombre de personnes dans le groupe de personnes (401) par le dispositif de comptage de personnes (101) pour obtenir un premier nombre de personnes;
détecter (303) la pluralité de caractéristiques biométriques par le dispositif de détection (103);
comparer (305) au moins deux caractéristiques biométriques de la pluralité de caractéristiques biométriques par le dispositif de détection (103);
déterminer (307) un certain nombre de caractéristiques biométriques différentes dans la pluralité de caractéristiques biométriques pour obtenir un deuxième nombre de personnes par le dispositif de détection (103); et
fournir (309) la pluralité de caractéristiques biométriques pour un traitement ultérieur par le dispositif de détection (103) si le premier nombre de personnes correspond au deuxième nombre de personnes;
**caractérisé en ce que** le procédé (300) comprend l'émission d'un signal, en particulier un signal acoustique ou un signal visuel, en direction du groupe de personnes (401) par l'émetteur de signal (207) si le premier nombre de personnes ne correspond pas au deuxième nombre de personnes.

11. Programme informatique comprenant un code de programme pour mettre en oeuvre le procédé (300) selon la revendication 10, lorsque le code de programme est exécuté au niveau du dispositif de contrôle d'accès (200) selon l'une quelconque des revendications 1 à 9.
